# EUROPÄISCHE PATENTSCHRIFT

(11) **EP 3 225 139 B1**
(45) Veröffentlichungstag und Bekanntmachung des Hinweises auf die Patenterteilung: **29.04.2020**
(21) Anmeldenummer: 16162893.8
(22) Anmeldetag: 30.03.2016
(51) Int. Cl.: A47J 27/04, F22B 1/28

(54) **VERDAMPFEREINRICHTUNG FÜR WASSER**
VAPORISER DEVICE FOR WATER
DISPOSITIF D'EVAPORATION POUR L'EAU

(43) Veröffentlichungstag der Anmeldung: 04.10.2017
(73) Patentinhaber: E.G.O. Elektro-Gerätebau GmbH, 75038 Oberderdingen (DE)
(72) Erfinder: Albert, Tobias, 76703 Kraichtal (DE); Block, Volker, 75015 Bretten (DE); Mühlnikel, Roland, 75015 Bretten (DE); Schönemann, Konrad, 75056 Sulzfeld (DE); Tafferner, Michael, 76316 Malsch (DE)
(74) Vertreter: Patentanwälte Ruff, Wilhelm, Beier, Dauster & Partner mbB

(56) Entgegenhaltungen:
- EP-A2- 1 870 641
- WO-A2-2008/151798
- DE-A1-102007 054 457

## Beschreibung

Die Erfindung betrifft eine Verdampfereinrichtung für Wasser, insbesondere für einen Dampfgarer, sowie einen mit einer solchen Verdampfereinrichtung versehenen Dampfgarer als Elektro-Haushaltsgerät bzw. zur Zubereitung von Nahrungsmitteln.

Aus der DE 102007029244 A1 ist eine solche Verdampfereinrichtung samt einem Dampfgarer bekannt. Bei dieser ist in einem Wasserbehälter mit einer Außenwandung, an der außen eine Heizeinrichtung angeordnet ist, in einem Innenraum eine Innentrennwand angeordnet. Außenwandung und Innentrennwand sind rund und rohrförmig ausgebildet sowie konzentrisch ineinander angeordnet. Die Innentrennwand dient dazu, das Volumen des mit der Heizeinrichtung zu erhitzenden Wassers zu reduzieren bei möglichst großer beheizter Fläche für das Wasser. Dazu ist sie wasserdicht mit einem Boden des Wasserbehälter verbunden. So braucht nicht das gesamte Volumen des Wasserbehälters geheizt bzw. zum Kochen gebracht zu werden, bis eine Dampfentwicklung startet.

Aus der DE 102007054457 A1 ist eine weitere Verdampfereinrichtung bekannt mit einem vertikal ausgerichteten Wasserbehälter. Im unteren Bereich des Wasserbehälters ist außen an der Außenwandung eine Heizeinrichtung angeordnet. Innen verläuft eine Innentrennwand in Rohrform in vertikaler Richtung, von der Schikanen nach außen abstehen. Ähnlich stehen Schikanen von der Außenwandung nach innen ab. In den Schikanen sind jeweils Durchlässe vorgesehen. Durch sie wird dem erzeugten und aufsteigenden Dampf ein radialer Drall gegeben.

Aus der EP 1870641 A2 ist eine nochmals weitere Verdampfereinrichtung bekannt mit einem Wasserbehälter, dessen Boden zumindest teilweise von einer Heizung gebildet wird. Durch eine von einem Deckel nach unten ragende Innentrennwand wird ein seitlicher Trennbereich geschaffen, in dem das von der Heizeinrichtung zum Kochen gebrachte und somit stark bewegte Wasser etwas beruhigt ist. So können hier die Höhe des Wasserspiegels bzw. ein Füllstand besser erfasst werden.

### AUFGABE UND LÖSUNG

Der Erfindung liegt die Aufgabe zugrunde, eine eingangs genannte Verdampfereinrichtung sowie einen damit versehenen Dampfgarer als erfindungsgemäßes Elektro-Haushaltsgerät zu schaffen, mit denen Probleme des Standes der Technik gelöst werden können und es insbesondere möglich ist, einen konstruktiven Aufbau der Verdampfereinrichtung einfach und praxistauglich zu gestalten sowie einen möglichst vorteilhaften und effizienten Betrieb der Verdampfereinrichtung und eines damit versehenen Dampfgarers zu erreichen.

Gelöst wird diese Aufgabe durch eine Verdampfereinrichtung mit den Merkmalen des Anspruchs 1 sowie einen damit versehenen Dampfgarer. Vorteilhafte sowie bevorzugte Ausgestaltungen der Erfindung sind Gegenstand der weiteren Ansprüche und werden im Folgenden näher erläutert. Dabei werden manche der Merkmale nur für die Verdampfereinrichtung oder nur für den Dampfgarer beschrieben. Sie sollen jedoch unabhängig davon sowohl für die Verdampfereinrichtung als auch für den Dampfgarer selbstständig gelten können. Der Wortlaut der Ansprüche wird durch ausdrückliche Bezugnahme zum Inhalt der Beschreibung gemacht.

Es ist vorgesehen, dass die Verdampfereinrichtung Wasser zum Verdampfen bringt, wenngleich auch andere Flüssigkeiten möglich sind. Der dadurch entstandene Dampf soll in einem Dampfgarer auf übliche Art und Weise zum Garen bzw. Zubereiten von Nahrungsmitteln dienen. Die Verdampfereinrichtung weist einen Wasserbehälter mit einer Außenwandung auf, wobei in dem Wasserbehälter bzw. durch die Außenwandung ein Behältervolumen darin definiert ist. Dieses Behältervolumen kann relativ groß sein, beispielsweise 0,5 l bis 1 l oder sogar bis 3 l betragen. An der Außenwandung des Wasserbehälters ist eine Heizeinrichtung vorgesehen. Diese kann vorteilhaft flächig ausgebildet sein bzw. eine größere Fläche überdecken. Vorteilhaft kann sie als an sich bekannte Dickschichtheizeinrichtung ausgebildet sein. Des Weiteren ist in dem Wasserbehälter eine Innentrennwand vorgesehen, die zumindest teilweise mit einem Abstand zu der Außenwandung verläuft und die einen Innenbereich in dem Wasserbehälter definiert. In wenigen Punkten oder Bereichen kann die Innentrennwand den Wasserbehälter berühren bzw. an ihm oder an der Außenwandung anliegen. Sie soll jedoch weitgehend einen Abstand zu der Außenwandung aufweisen. Der in der Innentrennwand definierte Innenbereich ist vorteilhaft nicht klein im Vergleich zum gesamten Behältervolumen, besonders vorteilhaft beträgt er zwischen 40% und 75% oder sogar 95% des Behältervolumens, also einen großen oder dessen größten Teil. Nach oben kann der Innenbereich innerhalb der Innentrennwand vorteilhaft zumindest teilweise offen sein.

Zwischen der Innentrennwand und der Außenwandung ist ein sogenannter Außenbereich gebildet. In diesem Außenbereich soll Wasser durch die Heizeinrichtung erhitzt und verdampft werden zur Erzeugung von Dampf. Das Behältervolumen kann also im Wesentlichen die Summe von Innenbereich und Außenbereich gemeinsam betragen. Vorteilhaft ist das Volumen des Innenbereichs größer als dasjenige des Außenbereichs, siehe vorhergehende Angaben für den Außenbereich. Der Außenbereich ist vorteilhaft nach oben offen, also innerhalb des Wasserbehälters. Der Wasserbehälter kann einen Wasserzulauf und einen Dampfaustritt aufweisen bzw. vorteilhaft bis auf einen Wasserzulauf und einen Dampfaustritt geschlossen sein, so dass er sowohl dicht ist gegen einen Wasseraustritt als auch eine gezielte Entnahme von Dampf ermöglicht. Besonders vorteilhaft ist nur ein einziger Wasserzulauf vorgesehen. In ähnlicher Weise kann besonders vorteilhaft ein einziger Dampfaustritt vorgesehen sein an ein Rohr oder einen Schlauch. Unter Umständen kann noch eine weitere Schnittstelle am Wasserbehälter als Zulauf oder als Ablauf vorgesehen sein, was später näher beschrieben wird.

Erfindungsgemäß weist der Wasserbehälter mindestens einen Durchlasskanal auf für einen Wasserfluss zwischen dem Innenbereich und dem Außenbereich. Somit ist hier also im Gegensatz zum vorgenannten Stand der Technik vorgesehen, dass der Innenbereich auch Wasser enthält bzw. mit Wasser gefüllt ist. Nach Art eines kommunizierenden Systems kann das Wasser durch den Durchlasskanal vom Innenbereich in den Außenbereich fließen. Dadurch ist es möglich, dass das Nachfüllen von Wasser im Außenbereich zumindest teilweise, insbesondere vollständig, durch den mindestens einen Durchlasskanal erfolgt aus dem Innenbereich. Insbesondere wenn der Innenbereich größer ist als der Außenbereich bzw. ein größeres Volumen aufweist ist es so möglich, dass durch die Heizeinrichtung mit dem Außenbereich nur ein eher kleines Wasservolumen aufgeheizt werden muss bis zur Erzeugung von Dampf. Das Versorgen mit Wasser bzw. das Nachliefern von Wasser muss dann aber nicht aufwendig und genau sowie störungsanfällig gesteuert werden bzw. geregelt werden über den Wasserzulauf. Da die Wassermenge im Außenbereich eine Rolle spielt für die Dampferzeugung bzw. das Verhalten der Dampferzeugung, insbesondere im Zusammenhang mit der von der Heizeinrichtung eingebrachten Heizleistung, ist es einfacher, den Wasserzulauf in den Innenbereich hinein zu legen. So kann vom Innenbereich und somit von einem vorteilhaft größeren Volumen aus ein selbsttätiges Nachfüllen des Außenbereichs erfolgen. Vor allem wenn der Innenbereich 50% bis 100% oder sogar 150% größer ist als der Außenbereich ist der Vorteil des Erhitzens des geringeren Wasservolumens samt des einfachen selbsttätigen Nachfüllens besonders groß.

Bei der Erfindung ist der mindestens eine Durchlasskanal an der Innentrennwand direkt bzw. durch die Innentrennwand vorgesehen als eine Art einfache Durchlassöffnung für das Wasser. Dies ist unten noch direkt in der Trennwand selbst oder an einem unteren Bereich der Innentrennwand, also evtl. in einem Boden des Wasserbehälters, an den die Innentrennwand heranreicht bzw. auf dem die Innentrennwand stehen kann. Der Durchlasskanal muss also nicht zwingend in der Innentrennwand selbst vorgesehen sein. Vorteilhaft ist der Durchlasskanal bzw. eine entsprechende Durchlassöffnung an einem untersten Punkt der Innentrennwand vorgesehen oder in einem untersten Bereich der Innentrennwand. Dadurch ist es möglich, dass das Wasser möglichst weit unterhalb der Oberfläche des siedenden Wassers im Außenbereich nachfließt, um eine besser steuerbare Dampfentwicklung zu ermöglichen. Vorteilhaft können mehrere Durchlasskanäle oder Durchlassöffnungen vorgesehen sein, besonders vorteilhaft zwei bis sechs Durchlasskanäle.

In einer ersten grundsätzlichen Ausgestaltung der Erfindung kann die Innentrennwand in vertikaler Richtung weitgehend gerade verlaufen, sich also von unten nach oben gerade erstrecken. Dabei ist sie umlaufend bzw. ringartig geschlossen ausgebildet, vorzugsweise als eine Art Rohr bzw. Rohrabschnitt, insbesondere zylindrisch. Vorteilhaft kann die Innentrennwand auf einem Boden des Wasserbehälters aufstehen bzw. mit diesem verbunden sein. So kann die Innentrennwand gut im Wasserbehälter befestigt werden und eine Befestigung an der Außentrennwand, welche thermisch nachteilig wäre sowie das Erhitzen des Wassers behindern würde, ist nicht notwendig. Besonders vorteilhaft ist die Innentrennwand bis auf den Durchlasskanal zwischen Innenbereich und Außenbereich geschlossen und umlaufend ausgebildet. So kann sie beispielsweise ein genannter Rohrabschnitt sein, der an seiner Unterkante Ausnehmungen für die Durchlasskanäle oder den Durchlasskanal aufweist, die dann beim Aufstellen auf einen Boden des Wasserbehälters eben den untersten Bereich der Innentrennwand definieren. Alternativ zu solchen Durchlasskanälen direkt in der Innentrennwand könnten in dem Boden des Wasserbehälters rinnenartige Vertiefungen vorgesehen sein, die zwischen 2 mm und 5 mm bis 10 mm unterhalb der sonstigen Bodenfläche reichen. Steht die Innentrennwand mit einer geraden bzw. in einer Ebene verlaufenden Unterkante auf dem vorteilhaft ansonsten ebenen Boden auf, so werden zwischen dieser Unterkante und den Vertiefungen die Durchlasskanäle gebildet. In diesem Fall sind die Durchlasskanäle dann eigentlich eher am bzw. im Boden des Wasserbehälters gebildet als direkt an der Innentrennwand selbst.

Bei der Erfindung verläuft die Innentrennwand in horizontaler Richtung weitgehend gerade und ist rohrartig ausgebildet nach Art eines liegenden Rohrs oder Rohrabschnitts. Während also bei der vorgenannten ersten grundsätzlichen Ausgestaltung der Erfindung die Innentrennwand nach Art eines aufrecht stehenden Rohres ausgebildet ist, ist sie bei der zweiten grundsätzlichen Ausgestaltung der Erfindung eher eine Art liegendes Rohr. Dementsprechend ist jeweils bevorzugt die Außenwandung mit einem der Innentrennwand entsprechendem Verlauf und Ausrichtung ausgebildet, bei der ersten grundsätzlichen Ausgestaltung der Erfindung also auch die Außenwandung ein in vertikaler Richtung umlaufendes und ringförmig geschlossenes Rohr. Bei der zweiten grundsätzlichen Ausgestaltung der Erfindung ist die Außenwandung eher als liegendes Rohr ausgebildet.

Bei der Erfindung ist der mindestens eine Durchlasskanal ebenfalls im unteren Bereich der Innentrennwand bzw. des diese bildenden Rohrs vorgesehen. Besonders vorteilhaft ist der Durchlasskanal dann durch mindestens eine Öffnung nach unten als Durchlassöffnung bzw. Durchlasskanal gebildet. Hier können zwar auch benachbarte Vertiefungen am Boden des Wasserbehälters vorgesehen sein, diese reichen alleine aber nicht, eine Öffnung unten in der Innentrennwand ist notwendig. Alternativ kann an den Enden einer liegenden rohrartigen Innentrennwand ein Abstand zu Endscheiben der Außenwandung vorgesehen sein, so dass hier mindestens ein Durchlasskanal in den Außenbereich gebildet ist. Vorteilhaft ist zusätzlich an den Innentrennwand eine Öffnung nach oben vorgesehen, ähnlich wie auch bei der ersten grundsätzlichen Ausgestaltung der Erfindung eine Öffnung nach oben vorgesehen ist. Besonders vorteilhaft ist bei der zweiten grundsätzlichen Ausgestaltung der Erfindung der mindestens eine Durchlasskanal als länglicher Schlitz oder als längliche Öffnung ausgebildet, die jeweils an einem tiefen oder an einem niedrigsten Punkt der Innentrennwand verlaufen. Durch einen gewissen Abstand der Innentrennwand zum Boden des Wasserbehälters bzw. zur Außenwandung ermöglichen sie einen Wasserfluss vom Innenbereich in den Außenbereich.

Wie zuvor angedeutet sollte allgemein die Innentrennwand bzw. der von ihr gebildete Innenbereich in vertikaler Richtung nach oben offen sein oder Öffnungen aufweisen. Bei einer Verdampfereinrichtung in der ersten grundsätzlichen Ausgestaltung der Erfindung ist vorteilhaft vorgesehen, dass die Innentrennwand den Innenbereich nicht überdeckt oder abschließt. Besonders vorteilhaft ist hier die Innentrennwand ausschließlich vertikal ausgebildet. Dies hat den Zweck, dass während des Dampfaustritts von dem Dampf mitgerissene Wassertropfen oder kondensiertes Wasser direkt nach unten in den Innenbereich tropfen können und somit erneut direkt in den Wasserkreislauf in den Außenbereich hinein zur Dampferzeugung einfließen. Hierzu wird nachfolgend noch mehr ausgeführt im Zusammenhang mit einer Dampfführung entsprechend einer vorteilhaften Ausbildung der Erfindung.

Vorteilhaft ist ganz allgemein bei der Erfindung vorgesehen, dass auch der Innenbereich zumindest teilweise, insbesondere weitgehend, mit Wasser gefüllt ist. Durch die wasserführende Verbindung mit dem Außenbereich über den Durchlasskanal ist die Höhe des Wasserstandes im Innenbereich dieselbe wie die im Außenbereich.

Bevorzugt sind die Außenwandung und die Innentrennwand umlaufend und/oder rund ausgebildet. Besonders bevorzugt können sie einen gleichartigen Querschnitt aufweisen, so dass es beispielsweise möglich ist, sie jeweils kreisrund auszugestalten.

Die Außenwandung und die Innentrennwand können vorteilhaft jeweils Längsmittelachsen aufweisen, die parallel zueinander sind. Vorteilhaft fallen die Längsmittelachsen zusammen, was insbesondere für die erste grundsätzliche Ausgestaltung der Erfindung von Vorteil ist, aber auch bei der zweiten grundsätzlichen Ausgestaltung der Erfindung möglich ist. Dann weisen Außenwandung und Innentrennwand stets gleichen Abstand zueinander auf bzw. das Wasservolumen pro Fläche der außen angeordneten Heizeinrichtung ist weitgehend überall gleich. Dadurch ist eine gleichmäßige Einbringung von Heizleistung und somit eine gleichmäßige Erhitzung des Wassers im Außenbereich möglich.

In weiterer Ausbildung der Erfindung ist es möglich, dass eine Heizeinrichtung an der Außenseite eine in der Richtung nach oben variierende Verteilung der Heizleistung aufweist. So kann die Heizleistung pro Flächeneinheit und somit die Flächenleistungsdichte nach oben zunehmen, insbesondere bis ganz nach oben. Dadurch kann vor allem dort maximal viel Heizleistung eingebracht werden, wo das zu erhitzende Wasser nahezu direkt als Dampf nach oben austreten kann.

In ähnlicher Form können in Richtung nach oben mehrere verschiedene Heizkreise vorgesehen sein, die einzeln ansteuerbar sind, insbesondere abhängig von einer im Wasserbehälter vorhandenen Füllstandshöhe. Dies ist aber grundsätzlich bekannt aus der DE 102015207253.3 mit Anmeldetag vom 21. April 2015.

Der Vorteil einer rohrartigen Ausgestaltung zumindest der Außenwandung liegt darin, dass dann eine Aufbringung von Dickschichtheizleitern besonders gut möglich ist. Dies kann vorteilhaft durch Bedrucken erfolgen.

Bei der zweiten grundsätzlichen Ausgestaltung der Erfindung können die Längsmittelachsen auch parallel zueinander sein, allerdings müssen sie nicht unbedingt zusammenfallen. Vorteilhaft ist hier eine Längsmittelachse der Innentrennwand niedriger als eine Längsmittelachse der Außenwandung.

Bei einer vorteilhaften Ausbildung der Erfindung ist eine Dampfführung hin zum Dampfaustritt vorgesehen, die den Innenbereich zumindest teilweise überdeckt bzw. über diesem verläuft. Es ist zwar möglich, den Wasserbehälter nach oben zu einfach zu schließen mit einer Art Deckel odgl., in dem dann eine Öffnung als Dampfaustritt mit daran anschließendem Rohr oder Schlauch zur Weiterleitung des Dampfes in den Dampfgarer vorgesehen ist. Vorteilhaft bewirkt die Dampfführung aber auch eine Art Trennung von einerseits Dampf und andererseits mitgerissenen Wasserpartikeln bzw. Wassertröpfchen oder Wassertropfen, die nicht in das Innere des Dampfgarers gelangen sollen. Dazu kann die Dampfführung Führungsflächen aufweisen, die einen schrägen Verlauf haben, wobei die Schräge nach unten in den Innenbereich weisen kann. Dadurch kann an diesen schrägen Führungsflächen ein Niederschlagen der genannten Wasserpartikel oder Wassertröpfchen stattfinden, die dann selbsttätig in den Innenbereich hineintropfen und so, wie zuvor erläutert, wieder in den Wasserkreislauf gelangen. Dabei können diese Führungsflächen, insbesondere bei einer ersten grundsätzlichen Ausgestaltung der Erfindung, umlaufend bzw. rotationssymmetrisch ausgebildet sein und beispielsweise als eine Art Konus oder konischer Ring ausgebildet sein.

Vorteilhaft liegt ein Dampfaustritt über dem Innenbereich, besonders vorteilhaft in vertikaler Richtung genau über dem Innenbereich. Dann kann Dampf ohne große Umwege, die mit Nachteilen wie Abkühlung und Verzögerung einer Dampferzeugung im Dampfgarer, verbunden sind, vermieden werden. Des Weiteren kann dann ein vorgenanntes Abtropfen oder Herausfallen von Wasserpartikeln oder Wassertröpfchen auch noch direkt am Dampfaustritt in den Innenbereich hinein erfolgen.

Einerseits ist es möglich, dass die Führungsflächen an einem Deckel oder einem oberen Bereich des Wasserbehälters angeordnet und/oder befestigt sind. Es können beispielsweise angeklebte oder angeschweißte flächige Teile sein. Alternativ können die Führungsflächen an der Innentrennwand befestigt sein, beispielsweise mittels dünner Haltestege odgl..

Wie zuvor angedeutet, ist der Wasserbehälter vorteilhaft nach oben zu geschlossen. Dazu kann ein Deckel vorgesehen sein, an dessen höchstem Punkt der vorgenannte Dampfaustritt vorgesehen sein kann. Vorzugsweise ist nur der Dampfaustritt daran vorgesehen als einzige Öffnung des Wasserbehälters nach außen bzw. nach oben. Dies ist eben insbesondere bei einer ersten grundsätzlichen Ausgestaltung der Erfindung möglich. Bei der zweiten grundsätzlichen Ausgestaltung der Erfindung kann bei einem Wasserbehälter nach Art eines liegenden Rohres an einer seitlichen Wand nach Art einer Dichtscheibe ein Dampfaustritt vorgesehen sein, und zwar vorteilhaft im oberen Bereich. Besonders vorteilhaft ist dies auch am höchsten Punkt. Auch hier kann nur der Dampfaustritt daran vorgesehen sein als einzige Öffnung des Wasserbehälters nach außen bzw. nach oben.

In weiterer Ausbildung der Erfindung kann der Wasserbehälter nach oben zu geschlossen sein und dort einen Innenabschnitt aufweisen, der über dem Innenbereich angeordnet ist und nach unten reicht bzw. nach unten verläuft. Dieser Verlauf nach unten erfolgt durch genannte Führungsflächen der Dampfführung, so dass der Innenabschnitt des Wasserbehälters selbst oder sein Deckel die Führungsflächen bildet. Mittig in diesem Deckel kann dann beispielsweise auch ein Wasserzulauf in den Innenbereich ausgebildet sein. Über dem Außenbereich bildet der Wasserbehälter bzw. sein Deckel einen Außenabschnitt, der vorteilhaft höher verläuft als der genannte Innenabschnitt. Der Dampfaustritt geht von diesem höher verlaufenden Außenabschnitt ab, so dass wiederum der höchste Punkt im Wasserbehälter für den Dampfaustritt genutzt wird. Gleichzeitig ist es dadurch möglich, dass der Dampf, der vom Außenbereich aufsteigt, direkt im Außenabschnitt vertikal darüber gesammelt wird und zum Dampfaustritt strömt. An den nach unten und nach innen weisenden Führungsflächen des Deckels des Wasserbehälters können kondensiertes Wasser bzw. mitgerissene Wassertröpfchen nach unten laufen und dann von einer Abtropfkante als tiefster Punkt der Führungsflächen nach unten in den Innenbereich hinein abtropfen.

In weiterer Ausgestaltung der Erfindung kann der Wasserbehälter zusätzlich zu Wasserzulauf und Dampfaustritt maximal eine weitere Schnittstelle als Zulauf oder Ablauf aufweisen. Diese kann genutzt werden zum Entkalken, Entleeren odgl., so dass sich kein stehendes Wasser ansammeln kann, was bei längeren Betriebspausen schädlich wäre. Vorzugsweise ist der Wasserbehälter bis auf Wasserzulauf und Dampfaustritt geschlossen. Die weitere Schnittstelle ist bevorzugt verschließbar, beispielsweise manuell oder mit einem gesteuerten Ventil.

In vorteilhafter Ausbildung der Erfindung ist eine Heizeinrichtung nur an der Außenseite der Außenwandung vorgesehen. Dadurch ist es möglich, sie an einem trockenen Bereich anzuordnen. Es könnte zwar auch am Boden des Wasserbehälters, insbesondere unterhalb des Außenbereichs, eine Heizeinrichtung zusätzlich angeordnet sein, die diesen zusätzlich beheizt. Hier ist jedoch die zur Verfügung stehende Fläche und somit die dadurch erreichbare Heizleistung gering. Besonders vorteilhaft wird eine Dickschichtheizeinrichtung mit Dickschichtheizleitern verwendet, die vor allem gut ist für eine flächige Beheizung. Die Heizeinrichtung kann dabei in einen, zwei oder noch mehr Heizkreise aufgeteilt sein, die unabhängig voneinander und evtl. mit unterschiedlicher Leistung bzw. mit unterschiedlicher Flächenleistung betrieben werden können, wie zuvor erläutert worden ist. Insbesondere kann eine Aufteilung in vertikal unterschiedlich hohe Bereiche vorgesehen sein.

In vorteilhafter Ausbildung der Erfindung führt ein Wassereintritt direkt in den Innenbereich, insbesondere ausschließlich in den Innenbereich und nicht direkt in den Außenbereich. Dadurch kann eben nachströmendes Wasser, das insbesondere üblicherweise kühl ist und das evtl. eine zusätzliche Wasserbewegung erzeugt, nur in den Innenbereich geführt werden. Durch den mindestens einen Durchlasskanal kann es dann selbststätig und voraussichtlich mit geringer Dynamik in den Außenbereich nachfließen.

In einer Ausbildung der Erfindung kann die Innentrennwand aus thermisch gut dämmendem Material bestehen, insbesondere aus Kunststoff oder aus Keramik. Dies kann auch für den Boden des Wasserbehälters oder zumindest einen oberen Bereich des Bodens gelten. Dadurch kann bewirkt werden, dass die von der Heizeinrichtung eingebrachte Heizleistung weitgehend nur in den Außenbereich eingebracht wird bzw. das Wasser im Außenbereich erhitzt. Zum Innenbereich in ist dann die Wärmedämmung gegeben. Dadurch kann im Außenbereich eine schnellere Dampfbildung erreicht werden. Somit müssen nur beispielweise 10% bis 50% des gesamten Wassers im Wasserbehälter erhitzt werden.

In einer anderen Ausbildung der Erfindung kann die Innentrennwand aus thermisch gut leitendem Material bestehen, insbesondere aus Metall oder entsprechend ausgebildeten Kunststoffen oder Keramik-Materialien. Dadurch ist es dann möglich, dass Wärme auch durch die Innentrennwand vom Außenbereich in den Innenbereich fließt zu dessen Erwärmung. Dann ist das in den Außenbereich nachfließende Wasser nicht mehr ganz so kalt bzw. vorgewärmt, was eine schnellere Verdampfung bewirken kann.

In vorteilhafter Ausbildung der Erfindung ist die Innentrennwand niedriger als die Außenwandung des Wasserbehälters. Gleichzeitig ist vorteilhaft die Innentrennwand höher als eine an der Außenwandung angeordnete Heizeinrichtung, so dass ein Wasserspiegel von Wasser in dem Wasserbehälter unterhalb der Innentrennwand liegt. Gleichzeitig sollte der Wasserspiegel aber in etwa die Höhe der Heizeinrichtung haben, so dass kein zu großer Anteil der Heizeinrichtung über dem Wasserspiegel liegt und somit der Gefahr einer zu starken Überhitzung ausgesetzt ist. In Zahlen ausgedrückt kann die Höhe der Innentrennwand zwischen 80% und 99%, vorteilhaft zwischen 85% und 95%, der Höhe der Außenwandung betragen. Bei der zweiten grundsätzlichen Ausgestaltung der Erfindung sollten dies zwischen 70% und 90% sein, also etwas weniger.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung gemäß der zwei grundsätzlichen Ausgestaltungen sind in den Zeichnungen stark schematisch dargestellt und werden im Folgenden näher erläutert. In den Zeichnungen zeigen:
- Fig. 1: eine seitliche Schnittdarstellung durch eine erste erfindungsgemäße Verdampfereinrichtung gemäß einer ersten grundsätzlichen Ausgestaltung der Erfindung,
- Fig. 2: eine zweite erfindungsgemäße Verdampfereinrichtung gemäß der ersten grundsätzlichen Ausgestaltung der Erfindung,
- Fig. 3: eine dritte erfindungsgemäße Verdampfereinrichtung gemäß der ersten grundsätzlichen Ausgestaltung der Erfindung,
- Fig. 4: eine vierte erfindungsgemäße Verdampfereinrichtung gemäß der ersten grundsätzlichen Ausgestaltung der Erfindung,
- Fig. 5: eine erfindungsgemäße Verdampfereinrichtung in Schnittdarstellung von vorne gemäß einer zweiten grundsätzlichen Ausgestaltung der Erfindung,
- Fig. 6: die Verdampfereinrichtung aus Fig. 5 im seitlichen Schnitt,
- Fig. 7: eine weitere erfindungsgemäße Verdampfereinrichtung in Schnittdarstellung von vorne gemäß der zweiten grundsätzlichen Ausgestaltung der Erfindung und
- Fig. 8: die Verdampfereinrichtung aus Fig. 7 im seitlichen Schnitt.

### DETAILLIERTE BESCHREIBUNG DER AUSFÜHRUNGSBEISPIELE

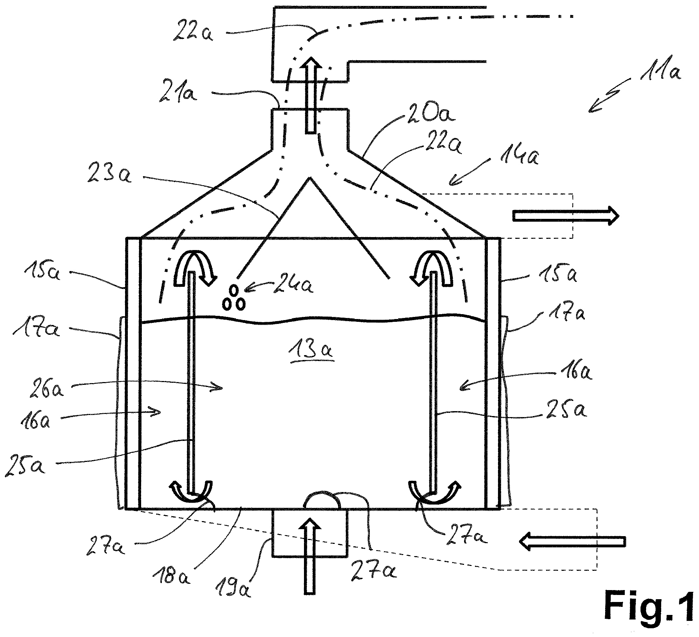

In der Fig. 1 ist schematisch eine erfindungsgemäße Verdampfereinrichtung gemäß einer ersten Möglichkeit in der vorbeschriebenen ersten grundsätzlichen Ausgestaltung der Erfindung dargestellt. Die Verdampfereinrichtung 11a enthält Wasser 13a zum Verdampfen in einem sogenannten Wasserbehälter 14a. Der Wasserbehälter 14a ist im Wesentlichen ein rundes bzw. kreisrundes und weitgehend rotationssymmetrisches Rohr mit einer Außenwandung 15a, an der außen eine flächige Heizeinrichtung 17a vorgesehen ist. Dies ist aus dem Stand der Technik bekannt, wozu beispielsweise auf die eingangs genannte DE 102007029244 A1 verwiesen wird. Der Wasserbehälter 14a weist einen Boden 18a mit einem zentralen Wasserzulauf 19a auf. Der Wasserzulauf 19a ist nicht weiter beschrieben oder dargestellt, da dieser für den Fachmann leicht realisierbar und bekannt ist. So kann der Wasserzulauf 19a beispielsweise an einen höher gelegenen Tank mit einem Ventil daran angeschlossen sein, so dass Wasser durch die Schwerkraft von alleine sozusagen direkt bei Öffnen des Ventils eintreten kann. Nach oben zu ist der Wasserbehälter 14a durch einen Deckel 20a verschlossen, der konusartig nach oben zuläuft und in einen zentralen Dampfaustritt 21a übergeht, der an der höchsten Stelle des Deckels 20a bzw. des gesamten Wasserbehälters 14a vorgesehen ist. Von dort aus geht Dampf 22a, der strichpunktiert dargestellt ist, in ein Rohr oder eine allgemeine Leitung hinein und wird in einen Garraum des Dampfgarers, in den die Verdampfereinrichtung 11a eingebaut ist, geführt.

In dem Wasserbehälter 14a ist eine Innentrennwand 25a angeordnet, die im Prinzip auch als eine Art kurzes Rohr ausgebildet ist und konzentrisch zur Außenwandung 15a verläuft. Während der Wasserbehälter 14a vorteilhaft weitgehend aus Metall gefertigt ist, insbesondere aus Edelstahl, kann die Innentrennwand 25a auch aus Kunststoff oder Keramik ausgebildet sein. Dies ist dann von Vorteil, wenn sie, wie zuvor beschrieben worden ist, thermisch dämmend wirken soll. Soll sie im Gegensatz dazu thermisch gut leitend ausgebildet sein, so kann sie aus Metall ausgebildet sein, und zwar entweder aus thermisch besonders gut leitendem Metall wie Kupfer, alternativ aus demselben Material wie der Wasserbehälter 14a.

Im unteren Bereich bzw. an einer Unterkante der Innentrennwand 25a sind mehrere Durchlasskanäle 27a vorgesehen. Sie können abgerundete bzw. halbrunde Form aufweisen und nur im unteren Bereich bzw. an der Unterkante der Innentrennwand 25a vorgesehen sein. Alternativ oder zusätzlich können noch an dieser Stelle Vertiefungen im Boden 18a des Wasserbehälters 14a vorgesehen sein, so dass unter Umständen die Innentrennwand 25a sogar als gerade abgeschnittenes Rohr ausgebildet sein kann. Ein Wasserfluss zwischen einem Innenbereich 26a und einem Außenbereich 16a kann so nur durch die im Boden 18a gebildeten Durchlasskanäle 27a stattfinden. Diese Variation ist für den Fachmann aber leicht vorstellbar und kann unter anderem von Fertigungsbedingungen abhängen. Üblicherweise wird es aber als einfacher angesehen, die Durchlasskanäle 27a als Ausnehmungen am unteren Rand der Innentrennwand 25a vorzusehen, die ein eigenständiges Bauteil ist, welches im Wasserbehälter 14a bzw. auf dem Boden 18a befestigt ist. Dann kann auch der Boden 18a als einfaches flaches Bauteil ausgebildet sein, an den mittig der Wasserzulauf 19a befestigt wird und außen die Außenwandung 15a. Auf alle Fälle ist es vorteilhaft, wenn die Durchlasskanäle 27a unten bzw. möglichst weit unten im Wasserbehälter 14a angeordnet sind, so dass zum einen möglichst viel Wasser vom Innenbereich 26a in den Außenbereich 16a fließen kann, der mittels der Heizeinrichtung 17a beheizt ist. Des Weiteren fließt das Wasser möglichst weit weg von der Oberseite des Wassers 13a bzw. vom Wasserspiegel in den Außenbereich 16a und stört somit die Erhitzung bzw. Verdampfung möglichst wenig.

Eine Dampfführung wird zum einen durch den konisch gewölbten und nach innen gezogenen Deckel 20a gebildet, was an dem Verlauf des Dampfes 22a erkannt werden kann. Des Weiteren sind mittig über dem Innenbereich 26a, insbesondere zentral und rotationssymmetrisch, Führungsflächen 23a vorgesehen. Diese können mittels nicht dargestellter Haltestege an der Innentrennwand 25a befestigt sein und somit zusammen mit dieser im Wasserbehälter 14a befestigt sein. Alternativ kann die Führungsfläche 23a innen am Deckel 20a befestigt sein. In beiden Fällen kann dies mittels nicht dargestellter Haltestege erfolgen. Sinn und Zweck der Führungsfläche 23a ist es, dass beim Entlangströmen des Dampfes 22a am Deckel 20a gebildetes kondensiertes Wasser sowie mitgerissene Wassertröpfchen 24a nach unten in den Innenbereich 26a hinein fallen. Zusätzlich verhindert die Führungsfläche 23a, dass erzeugter Dampf unterhalb des Dampfaustritts 21a zu weit nach unten absinkt in Richtung des Wasserspiegels im Innenbereich 26a und dadurch zu stark abkühlen könnte. Somit wird zwischen Deckel 20a und Führungsfläche 23a eine Art Dampfkanal gebildet.

Beim Sieden des Wassers 13a im Außenbereich 16a entstehende Spritzer von Wassertropfen odgl. können, wie die Pfeile über die obere Kante der Innentrennwand 25a andeuten, direkt nach innen in den Innenbereich 26a umgelenkt werden.

Gestrichelt dargestellt sind in der Fig. 1 ein alternativer Wasserzulauf unten an den Boden 18a, der in tangentialer Art herangeführt ist. Ebenso kann, wie gestrichelt dargestellt ist, ein alternativer Dampfaustritt am Deckel 20a vorgesehen sein.

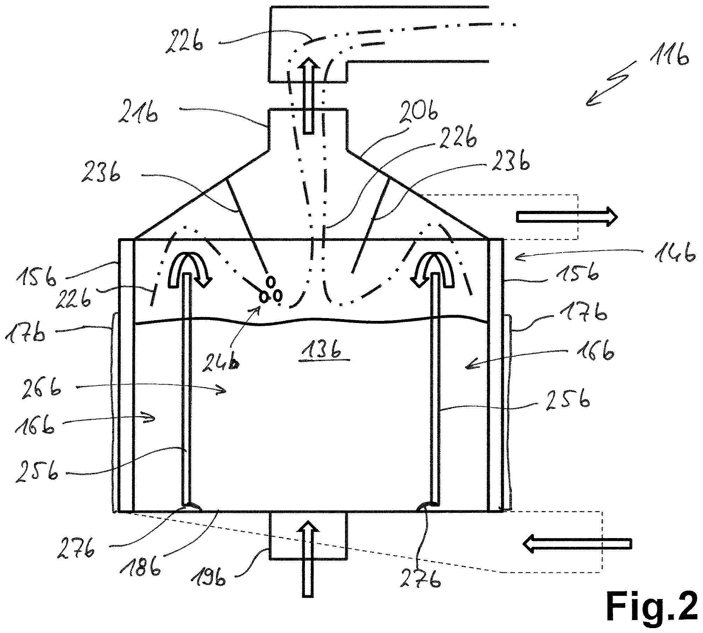

In der zweiten Möglichkeit für eine Verdampfereinrichtung 11b gemäß der ersten grundsätzlichen Ausgestaltung der Erfindung entsprechend der Fig. 2 ist wiederum ein Wasserbehälter 14b mit Wasser 13b darin dargestellt, der eine Außenwandung 15b, einen Boden 18b und einen Deckel 20b aufweist. Am Boden 18b ist ein Wasserzulauf 19b vorgesehen, und am Deckel 20b ein Dampfaustritt 21b. Außen an der Außenwandung 15b ist eine Heizeinrichtung 17b vorgesehen. Im Wasserbehälter 14b ist eine rohrartige Innentrennwand 25b angeordnet mit hier nur zwei Durchlasskanälen 27b. Diese sorgen für einen Wasserfluss zwischen einem innerhalb der Innentrennwand 25b gebildeten Innenbereich 26b und dem zwischen Innentrennwand 25b und Außenwandung 15b gebildeten Außenbereich 16b.

Im Unterschied zu der Verdampfereinrichtung 11a der Fig. 1 sind hier die inneren Führungsflächen 23b anders ausgebildet. Sie sind unten am Deckel 20b befestigt und können wiederum umlaufend bzw. konusartig ausgebildet sein. Allerdings reichen sie schräg nach innen und unten weisend in die Mitte des Innenbereichs 26b. Der Dampf 22b muss auf seinem Weg von der Wasseroberfläche im Außenbereich 16b zum Dampfaustritt 21b hin eine Art S-förmigen Weg nehmen, er strömt also zuerst unten am Deckel 20b entlang nach oben, dann wieder an den Führungsflächen 23b entlang nach unten. Dort strömt er um deren freie Unterkante herum, wobei sich hier wiederum Wassertröpfchen 24b lösen bzw. abscheiden lassen, die in den Innenbereich 26b gelangen bzw. tropfen. Der Dampf 22b setzt dann seinen Weg nach oben fort zum Dampfaustritt 21b. Durch diese Art vereinfachte Labyrinthführung ist es eben sehr gut möglich, ungewünschte Wassertröpfchen aus dem Dampf herauszutrennen und in den Innenbereich 26b zurückzuführen.

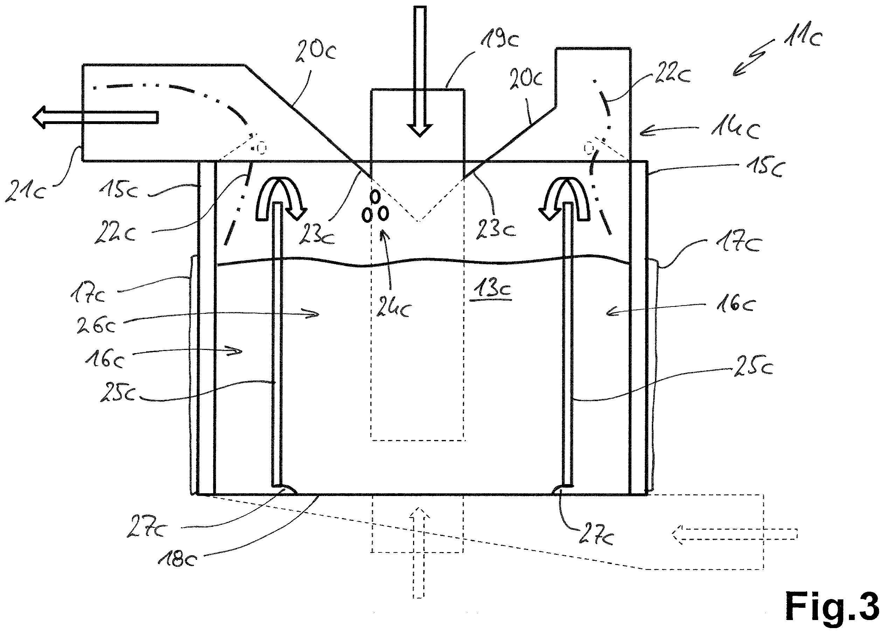

In der nochmals weiteren dritten Möglichkeit einer Verdampfereinrichtung 11c entsprechend Fig. 3 weist ein Wasserbehälter 14c eine rohrartig umlaufende Außenwandung 15c auf. An dieser ist außen eine Heizeinrichtung 17c vorgesehen wie auch zuvor beschrieben. Der Wasserbehälter 14c weist einen Boden 18c und einen Deckel 20c. Der Boden ist hier einfach und eben ohne Unterbrechung oder Durchbrechung ausgebildet, weil ein Wasserzulauf 19c von oben zentral durch den Deckel 20c hindurch geht, und zwar auch wieder, wie gestrichelt dargestellt ist, in einen Innenbereich 26c innerhalb einer Innentrennwand 25c, beispielsweise bis kurz vor den Boden 18c. Die Innentrennwand 25c ist wiederum ähnlich ausgebildet wie zuvor zu Fig. 2 beschrieben mit Durchlasskanälen 27c, hier ebenfalls nur zwei Stück. Sie bildet mit der Außenwandung einen Außenbereich 16c.

Am Deckel 20c ist um den zentralen Wasserzulauf 19c herum eine konusartige Führungsfläche 23c vorgesehen. An deren Unterkante können aus dem austretenden Dampf 22c herausfallende Wassertropfen 24c wiederum direkt in den Innenbereich 26c und nicht in den Außenbereich 16c gelangen.

Im Außenabschnitt weist der Deckel 20c einen umlaufenden, ringartigen Kanal auf, der nach links zu dem Dampfauslass 21c führt. Bei dieser Ausbildung der Erfindung kann also bei einer grundsätzlichen vertikalen Gestaltung sowohl der Innentrennwand 25c als auch der Außenwandung 15c das Sammeln von Dampf 22c nicht zentral über dem Innenbereich 26c erfolgen, sondern über dem Außenbereich 16c. Durch die schrägen Führungsflächen 23c, die ebenfalls nach innen in den Innenbereich bzw. in einen Mittelbereich des Innenbereichs 26c gerichtet sind, können am Deckel 20c gesammeltes Kondenswasser oder Wassertröpfchen 24c nach unten in den Innenbereich 26c zurückfließen.

Gestrichelt dargestellt sind in der Fig. 3 ein alternativer Wasserzulauf unten an den Boden 18c, der ähnlich wie in Fig. 1 ausgebildet ist. Ebenso kann, wie gestrichelt dargestellt ist, ein alternativer Wasserzulauf tangential am Boden 18c vorgesehen sein.

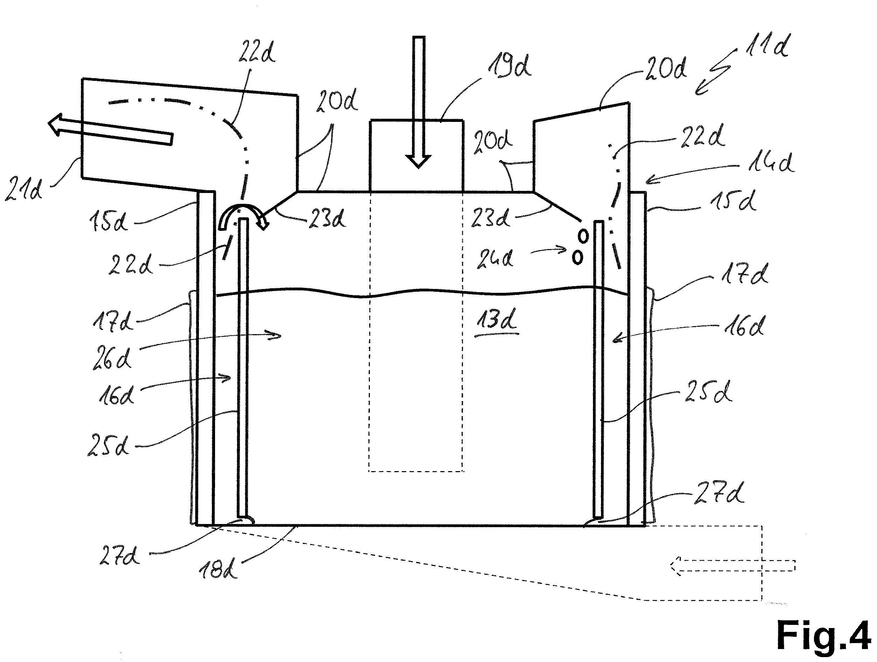

In der Fig. 4 ist schematisch eine weitere Möglichkeit für eine Verdampfereinrichtung 11d gemäß der ersten grundsätzlichen Ausgestaltung der Erfindung dargestellt. Sie ist im Prinzip ähnlich ausgebildet wie die Verdampfereinrichtung 11c der Fig. 3, nämlich mit einem Wasserbehälter 14d mit einer Außenwandung 15d, an der eine Heizeinrichtung 17d angeordnet ist. Des Weiteren weist der Wasserbehälter 14d einen Boden 18d auf, der hier auch wieder als flache Platte ausgebildet sein kann. Ein Deckel 20d ist komplexer ausgebildet mit einem Mittelabschnitt, der vertieft angeordnet ist und in dem zentral ein Wasserzulauf 19d angeordnet ist. Der Wasserzulauf 19d weist in einen Innenbereich 26d, der durch eine Innentrennwand 25d von einem Außenbereich 16d zwischen dieser Innentrennwand 25d und der Außenwandung 15d abgetrennt ist. Unten an der Innentrennwand 25d sind zwei relativ kleine Durchlasskanäle 27d ausgebildet für einen Wasserfluss zwischen Innenbereich 26d und Außenbereich 16d. Alternativ kann hier auch, wie gestrichelt angedeutet ist, ähnlich wie in der Fig. 3 ein Wasserzulauf von unten erfolgen.

Es ist auch leicht vorstellbar, wie zentral am Boden 18d anstelle des genannten gestrichelt dargestellten Wasserzulaufs ein eingangs beschriebener Ablauf vorgesehen sein könnte, alternativ auch anstelle des von rechts flach herangeführten gestrichelt dargestellten Wasserzulaufs. Dieser könnte kurz unterhalb des Bodens 18d oder direkt daran ein Ventil aufweisen. Er könnte in regelmäßigen Abständen oder immer nach jedem vollständigen Betriebsdurchlauf geöffnet werden zum Entleeren des Wasserbehälters 14d. Alternativ kann auch der gestrichelt dargestellte Wasserzulauf der hauptsächliche sein, während der obere Zulauf 19d zum Reinigen bzw. Entkalken odgl. genutzt werden kann.

Unten an dem von innen nach außen stufig verlaufenden Deckel 20d sind noch oberhalb des Innenbereichs 26d umlaufende Führungsflächen 23d ausgebildet. Diese sind als eine Art Konusring ausgebildet, allerdings als relativ schmaler Konusring. Die Führungsflächen 23d sollen das Einströmen von Dampf 22d in den Innenbereich 26d verhindern, so dass sich dieser in dem ringartig erhöhten Teil des Deckels 20d sammelt und an einem Dampfauslass 21d austreten kann. Wassertröpfchen 24d oder kondensiertes Wasser, insbesondere ganz oben im ringförmig umlaufenden Teil des Deckels 20d, werden an dessen schräger Fläche radial nach innen entlang laufen und dann entweder am vertikalen Teil des Deckels 20d nach unten laufen oder nach unten tropfen auf die Führungsflächen 23d. An diesen werden sie dann entlang laufen und noch innerhalb der Innentrennwand 25d, wie hier dargestellt, in den Innenbereich 26d fallen. Somit ist auch hier diese Rückführungsmöglichkeit gegeben. Der relativ schmale Spalt zwischen der Führungsfläche 23d und der Innentrennwand 25d stört nicht, da er auf alle Fälle ausreicht, dass hier herabtropfendes oder an der Oberseite der Führungsfläche 23d entlanglaufendes Wasser in den Innenbereich 26d und nicht in den Außenbereich 16d gelangt.

Die Fig. 4 zeigt auch eine Möglichkeit einer Verdampfereinrichtung, bei der der Abstand zwischen Innentrennwand 25d und Außenwandung 15d erkennbar sehr gering ist, in der Praxis beispielsweise 4 mm bis maximal 10 mm betragen kann, unter Umständen sogar auch noch weniger. So wird ein relativ geringes Wasservolumen in dem Außenbereich 16d erreicht, das mit der im Verhältnis dazu großflächigen Heizeinrichtung 17d sehr schnell und sehr effizient aufgeheizt werden kann zur Erzeugung von Dampf 22d. Insofern ist auch gerade hier ein steter Wasserfluss vom Innenbereich 26d in den Außenbereich 16d notwendig, um einen effizienten Betrieb der Verdampfereinrichtung 11d zu gewährleisten sowie eine ausreichende Menge an Wasser in dem Außenbereich 16d zu halten, um Schäden durch Überhitzung an der Heizeinrichtung 17d oder am Wasserbehälter 14d zu verhindern. Durch die stark unterschiedlichen Volumina von Wasser im Innenbereich 26d einerseits und im Außenbereich 16d andererseits ist gut erkennbar, dass ein theoretisch schnell absinkender Wasserspiegel im Außenbereich 16d sehr leicht durch Nachfluss von Wasser aus dem Innenbereich 26d ausgeglichen bzw. verhindert werden kann.

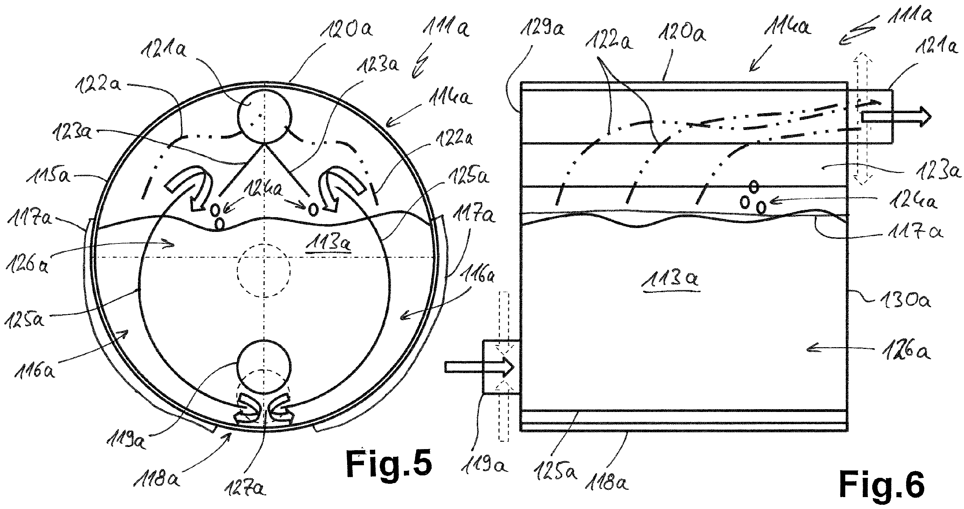

In der Fig. 5 in einer vorderen Schnittansicht sowie Fig. 6 in einer seitlichen Schnittansicht ist eine weitere Möglichkeit einer Verdampfereinrichtung 111a gemäß der zweiten grundsätzlichen Ausgestaltung der Erfindung dargestellt. Während bei den Verdampfereinrichtungen 11a bis 11d der Fig. 1 bis 4 der Wasserbehälter 14a samt Außenwandung 15a und Innentrennwand 25a in vertikaler Richtung gerade verlaufen sind bzw. vertikal verlaufende Rohre waren, sind es bei der Verdampfereinrichtung 111a horizontal verlaufende Rohre bzw. Rohrabschnitte. Ein Wasserbehälter 114a ist also als liegendes kurzes rundes Rohr ausgebildet und weist in einem unteren Bereich einen Boden 118a auf und in einem oberen Bereich einen Deckel 120a. Boden 118a und Deckel 120a sind hier nicht als separate Teile ausgebildet wie bei den vorherigen Verdampfereinrichtungen, sondern bilden eben den untersten Bereich und den obersten Bereich des Rohres. In der Fig. 6 nach links ist der Wasserbehälter 114a mittels einer linken Dichtscheibe 129a abgedichtet, in der ein Wasserzulauf 119a im unteren Bereich angeordnet ist. Nach rechts ist eine rechte Dichtscheibe 130a vorgesehen, in deren rechtem oberen Bereich ein Dampfaustritt 121a vorgesehen ist. Die Dichtscheiben 129a und 130a können auch als seitliche Deckscheiben angesehen werden, sie dichten ähnlich wie Deckel und Boden in den Fig. 1 bis 4 den rohrartigen Wasserbehälter 114a ab bzw. verschließen ihn. Gestrichelt sind in Fig. 5 Alternativen für den Wasserzulauf dargestellt, entweder weiter oben oder maximal tief unten.

Außen an der Außenwandung 115a ist eine Heizeinrichtung 117a ausgebildet und erstreckt sich bis auf etwa 60% der vertikalen Höhe des Wasserbehälters 114a. Die untersten 10% sind freigelassen, da hier eine Erwärmung offensichtlich zu viel Wärmeeintrag in einen Innenbereich 126a bringen würde, wo er eigentlich unerwünscht ist bzw. eine Energieeffizienz verschlechtert. In dem Wasserbehälter 114a verläuft eine Innentrennwand 125a nach Art eines Rohres mit waagerechtem Verlauf, die den Innenbereich 126a bildet. Die Innentrennwand 125a weist im untersten Bereich mehrere Durchlasskanäle 127a als eine Reihe von Öffnungen odgl. auf mit Verbindungsstegen dazwischen. Alternativ kann es auch ein durchgehender Schlitz sein, wobei eine mechanische Schwächung in diesem untersten Bereich bei diesem Ausführungsbeispiel nachteilig wäre. Nach oben zu ist die Innentrennwand 125a nämlich in einem breiten Bereich über ihre volle Länge geöffnet bzw. ausgeschnitten. So wird der Innenbereich 126a gebildet, der durch die Innentrennwand 125a von dem Außenbereich 116a abgetrennt ist. Der Wasserzulauf 119a führt direkt in den Innenbereich 126a.

Wie zu erkennen ist, verlaufen hier Innentrennwand 125a und Außenwandung 115a nicht parallel zueinander bzw. der Außenbereich 116a verbreitert sich von unten nach oben. Eine Längsmittelachse der Innentrennwand 125a verläuft unterhalb einer Längsmittelachse der Außenwandung 115a. Ein Wasserspiegel des Wassers 113a verläuft über der Heizeinrichtung 117a und unter der Oberkante der Innentrennwand 125a.

Oberhalb der Öffnung der Innentrennwand 125a nach oben verläuft eine längliche, umgekehrt V-förmige rinnenartige Führungsfläche 123a. Sie dient zur Dampfführung für Dampf 122a, der somit wiederum davon abgehalten werden soll, zu nahe über den Innenbereich 126a zu kommen. Gleichzeitig können an der Oberseite der Führungsfläche 123a nach unten laufende Wassertröpfchen 124a in den Innenbereich 126a zurückfließen.

Für den Dampfaustritt 121a ist in der rechten Dichtscheibe 130a einfach eine Öffnung vorgesehen, an die eine Leitung oder ein Schlauch angeschlossen sind. Dazu kann sich Dampf oben an der Außenwandung 115a im höchsten Bereich sammeln und in Längsrichtung der Verdampfereinrichtung 111a strömen hin zu dem Dampfaustritt 121a. Die Führungsflächen 123a können mit ihren Enden an den Dichtscheiben 130a und 130b befestigt werden.

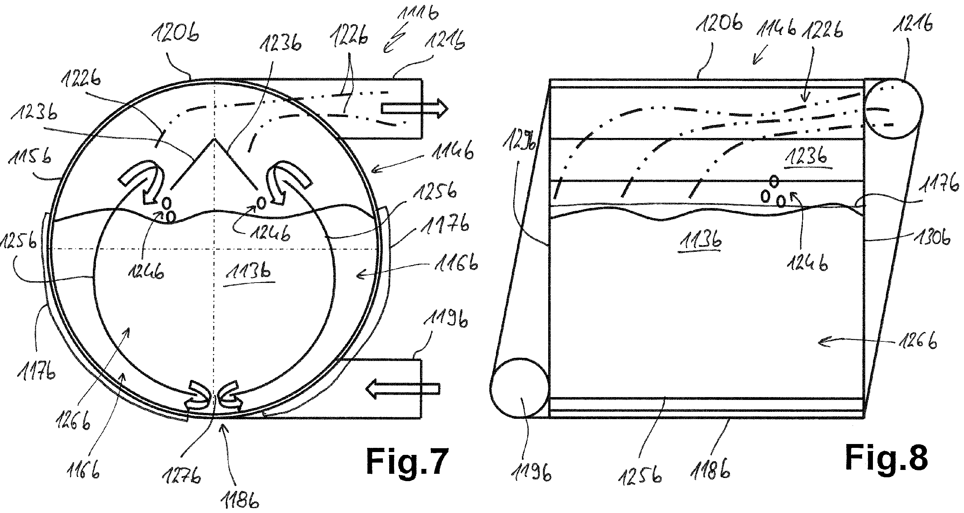

In einer weiteren Möglichkeit einer Verdampfereinrichtung 111b gemäß der zweiten grundsätzlichen Ausgestaltung der Erfindung nach den Fig. 7 und 8 ist ein Wasserbehälter 114b ähnlich ausgebildet wie in den Fig. 5 und 6, nämlich als kurzes liegendes Rohr mit einer Außenwandung 115b. Diese weist links eine Dichtscheibe 129b und rechts eine Dichtscheibe 130b auf. In einem unteren Bereich weist die Außenwandung 115b eine flächig verteilte Heizeinrichtung 117b auf ähnlich wie zuvor beschrieben. Innerhalb des Wasserbehälters 114b ist wie in dem vorherigen Ausführungsbeispiel eine Innentrennwand 125b mit einem Innenbereich 126b vorgesehen, die nach unten einen oder mehrere Durchlasskanäle 127b aufweist, vorteilhaft wiederum als einzelne Öffnungen mit Verbindungstegen dazwischen. Nach oben ist die Innentrennwand 125b weitgehend offen, wobei oberhalb dieser Öffnung eine umgekehrt V-förmige rinnenartige Führungsfläche 123b verläuft. Ein Wasserspiegel von Wasser 113b ist oberhalb der Heizeinrichtung 117b, aber unterhalb der Oberkanten der Innentrennwand 125b.

Im Unterschied zu dem Ausführungsbeispiel der Fig. 5 und 6 ist hier ein Wasserzulauf 119b tangential an die linke Dichtscheibe 129b geführt, so dass Wasser durch diesen Wasserzulauf 119b ebenfalls von links eintritt, allerdings nicht direkt ausschließlich in den Innenbereich 126b. Der Wasserzulauf 119b ist nämlich so weit unten vorgesehen, dass Wasser auch direkt in den Außenbereich 116b gelangt. Der tangentiale Wasserzulauf 119b kann unter Umständen für eine spezielle Anordnung der Verdampfereinrichtung 111b in einem engen Raum eines entsprechenden Dampfgarers von Vorteil sein. Ähnliches gilt für den tangentialen Dampfaustritt 121b, dieser geht von einer entsprechenden Öffnung in der rechten Dichtscheibe 130b ab. Ansonsten ist die Dampfführung ähnlich wie im vorhergehenden Ausführungsbeispiel, auch die Führungsflächen 123b weisen dieselbe Aufgabe auf.

In einer weiteren Ausbildung der Erfindung kann noch allgemein vorgesehen sein, dass im Außenbereich des Wasserbehälters Stahlwolle odgl. vorgesehen ist. Diese dient zum einen dazu, zu starke Wasserbewegungen zu dämpfen. Zum anderen hat sie sich als vorteilhaft zur Zerteilung größerer aufsteigender Dampfblasen in dem siedenden Wasser erwiesen, so dass eine geringere Tendenz zur Bildung von Wasserspritzern bzw. großen Wasserspritzern gegeben ist. Schließlich kann hier auch noch eine Verkalkung aufgefangen werden bzw. eine Verkalkung an der Innenseite der Außenwandung zur Heizeinrichtung hin reduziert werden, da sich Kalk überwiegend an der Stahlwolle selbst festsetzt. Von dieser kann er aber leichter gelöst werden als von der Innenseite der Außenwandung, auch weil die Stahlwolle biegbar ist und dadurch der Kalk abgelöst wird. Zusätzlich beeinträchtigt der Kalk an der Stahlwolle deren Funktion nicht, was bei einer Ablagerung an der Innenseite der beheizten Außenwandung ganz anders ist.

## Patentansprüche

1. Verdampfereinrichtung (111) für Wasser (113), wobei
- die Verdampfereinrichtung (111) einen Wasserbehälter (114) mit einer Außenwandung (115) aufweist,
- an der Außenwandung eine Heizeinrichtung (117) vorgesehen ist,
- in dem Wasserbehälter (114) eine Innentrennwand (125) vorgesehen ist, die mit Abstand zu der Außenwandung (115) verläuft und die einen Innenbereich (126) in dem Wasserbehälter definiert,
- zwischen Innentrennwand (125) und Außenwandung (115) ein Außenbereich (116) gebildet ist,
- der Wasserbehälter (114) einen Wasserzulauf (119) und einen Dampfaustritt (121) aufweist,
- der Wasserbehälter (114) mindestens einen Durchlasskanal (127) aufweist für einen Wasserfluss zwischen dem Innenbereich (126) und dem Außenbereich (116),
- der Durchlasskanal (127) an der Innentrennwand (125) und durch die Innentrennwand vorgesehen ist als mindestens eine Durchlassöffnung für das Wasser (113) unten an der Innentrennwand oder in einem unteren Bereich der Innentrennwand,
**dadurch gekennzeichnet, dass**
- die Innentrennwand (125) in horizontaler Richtung weitgehend gerade verläuft und rohrartig ausgebildet ist nach Art eines liegenden Rohrs,
- der mindestens eine Durchlasskanal (127) im unteren Bereich der Innentrennwand (125) vorgesehen ist.

2. Verdampfereinrichtung nach Anspruch 1, **dadurch gekennzeichnet, dass** der Durchlasskanal (127) an einem untersten Punkt der Innentrennwand (125) oder in einem untersten Bereich der Innentrennwand vorgesehen ist.

3. Verdampfereinrichtung nach Anspruch 1 oder 2, **dadurch gekennzeichnet, dass** die Innentrennwand in vertikaler Richtung weitgehend gerade verläuft, wobei sie umlaufend und ringartig geschlossen ausgebildet ist.

4. Verdampfereinrichtung nach einem der vorhergehenden Ansprüche, **dadurch gekennzeichnet, dass** die Innentrennwand (125) nach oben eine Öffnung aufweist.

5. Verdampfereinrichtung nach einem der vorhergehenden Ansprüche, **dadurch gekennzeichnet, dass** der mindestens eine Durchlasskanal (127) als länglicher Schlitz oder als längliche Öffnung ausgebildet ist, vorzugsweise am niedrigsten Punkt der Innentrennwand (125).

6. Verdampfereinrichtung nach einem der vorhergehenden Ansprüche, **dadurch gekennzeichnet, dass** die Innentrennwand (125) in vertikaler Richtung nach oben offen ist, wobei vorzugsweise bei einer Verdampfereinrichtung (111) nach einem der Ansprüche 1 bis 3 die Innentrennwand (125) den Innenbereich (126) nicht überdeckt oder abschließt.

7. Verdampfereinrichtung nach einem der vorhergehenden Ansprüche, **dadurch gekennzeichnet, dass** die Außenwandung (115) und die Innentrennwand (125) umlaufend und/oder rund ausgebildet sind, insbesondere mit gleichartigem Querschnitt ausgebildet sind, vorzugsweise kreisrund.

8. Verdampfereinrichtung nach einem der vorhergehenden Ansprüche, **dadurch gekennzeichnet, dass** eine Dampfführung hin zum Dampfaustritt (121) vorgesehen ist, wobei die Dampfführung den Innenbereich (126) zumindest teilweise überdeckt, wobei vorzugsweise die Dampfführung Führungsflächen (123) mit einem schrägen Verlauf aufweist mit einer Schräge, die nach unten in den Innenbereich (126) weist, wobei insbesondere die Führungsflächen umlaufend und/oder rotationssymmetrisch ausgebildet sind.

9. Verdampfereinrichtung nach Anspruch 8, **dadurch gekennzeichnet, dass** der Dampfaustritt (121) über dem Innenbereich (126) liegt, insbesondere in vertikaler Richtung genau über dem Innenbereich (126).

10. Verdampfereinrichtung nach Anspruch 8 oder 9, **dadurch gekennzeichnet, dass** die Führungsflächen (123) an einem Deckel (120) des Wasserbehälters (114) angeordnet und/oder befestigt sind.

11. Verdampfereinrichtung nach einem der vorhergehenden Ansprüche, **dadurch gekennzeichnet, dass** der Wasserbehälter nach oben zu geschlossen ist mittels eines Deckels mit einem höchsten Punkt mit dem Dampfaustritt daran, vorzugsweise nur mit dem Dampfaustritt daran als einzige Öffnung des Wasserbehälters nach außen.

12. Verdampfereinrichtung nach einem der Ansprüche 8 bis 10, **dadurch gekennzeichnet, dass** der Wasserbehälter (114) nach oben zu geschlossen ist und in einem Innenabschnitt über dem Innenbereich (126) nach unten reicht und/oder nach unten verläuft mit den Führungsflächen (123) der Dampfführung, während er in einem Außenabschnitt über dem Außenbereich (116) höher verläuft, wobei der Dampfaustritt (121) von diesem höher verlaufenden Außenabschnitt abgeht, wobei vorzugsweise der Wasserbehälter (114) nach oben zu geschlossen ist nur mit dem Dampfaustritt (121) daran als einzige Öffnung des Wasserbehälters nach außen.

13. Verdampfereinrichtung nach einem der vorhergehenden Ansprüche, **dadurch gekennzeichnet, dass** ein Wassereintritt (119) in den Innenbereich (126) führt, insbesondere ausschließlich oder zuerst in den Innenbereich, vorzugsweise von unten.

14. Verdampfereinrichtung nach einem der vorhergehenden Ansprüche, **dadurch gekennzeichnet, dass** der Wasserbehälter (114) zusätzlich zu Wasserzulauf (119) und Dampfaustritt (121) maximal eine weitere Schnittstelle als Zulauf oder als Ablauf aufweist, wobei vorzugsweise der Wasserbehälter (114) bis auf Wasserzulauf (119) und Dampfaustritt (121) geschlossen ist.

15. Verdampfereinrichtung nach einem der vorhergehenden Ansprüche, **dadurch gekennzeichnet, dass** die Innentrennwand (125) niedriger ist als die Außenwandung (115) des Wasserbehälters (114) und/oder höher ist als eine an der Außenwandung (115) angeordnete Heizeinrichtung (117), wobei vorzugsweise die Innentrennwand (125) über den vorgesehenen oder definierten Wasserspiegel von Wasser (113) in dem Wasserbehälter (114) ragt.

## Claims

1. Vaporiser device (111) for water (113), wherein
- the vaporiser device (111) includes a water tank (114) having an outer wall (115),
- a heating device (117) is provided on the outer wall,
- an inner partitioning wall (125) is provided within the water tank (114), the wall extending spaced from the outer wall (115) and defining an interior area (126) in the water tank,
- an exterior area (116) is formed between inner partitioning wall (125) and outer wall (115),
- the water tank (114) has a water inlet (119) and a vapor outlet (121),
- the water tank (114) has at least one passage channel (127) for water flow between the interior area (126) and the exterior area (116),
- the passage channel (127) on the inner partitioning wall (125) and through the inner partitioning wall is provided as at least one passage opening for the water (113) down below on the inner partitioning wall or in a lower region of the inner partitioning wall,
**characterized in that**
- the inner partitioning wall (125) extends largely in a straight line in the horizontal direction and has a tubular shape in the type of a lying tube,
- the at least one passage channel (127) is provided in the lower region of the inner partitioning wall (125).

2. Vaporiser device according to claim 1, **characterized in that** the passage channel (127) is provided at a lowermost point of the inner partitioning wall (125) or in a lowermost region of the inner partitioning wall.

3. Vaporiser device according to claim 1 or 2, **characterized in that** the inner partitioning wall extends largely in a straight line in the vertical direction, wherein it has a circumferential and annular closed shape.

4. Vaporiser device according to any of the preceding claims, **characterized in that** the inner partitioning wall (125) has an upward opening.

5. Vaporiser device according to any of the preceding claims, **characterized in that** the at least one passage channel (127) is an elongate slot or an elongate opening, preferably at the lowermost point of the inner partitioning wall (125).

6. Vaporiser device according to any of the preceding claims, **characterized in that** the inner partitioning wall (125) is open upwards in the vertical direction, wherein preferably with a vaporiser device (111) according to any of the claims 1 to 3 the inner partitioning wall (125) does not cover or close the interior area (126).

7. Vaporiser device according to any of the preceding claims, **characterized in that** the outer wall (115) and the inner wall (125) have a circumferential and/or round shape, in particular having a similar cross section, preferably are circular.

8. Vaporiser device according to any of the preceding claims, **characterized in that** a vapor guidance towards the vapor outlet (121) is provided, wherein the vapor guidance at least partially covers the interior area (126), wherein preferably the vapor guidance has guiding surfaces (123) with a sloped run having an inclination directed downwards into the interior area (126), wherein in particular the guiding surfaces have a circumferential and/or rotation symmetrical shape.

9. Vaporiser device according to claim 8, **characterized in that** the vapor outlet (121) is located above the interior area (126), in particular in the vertical direction exactly above the interior area (126).

10. Vaporiser device according to claim 8 or 9, **characterized in that** the guiding surfaces (123) are arranged on and/or fixed to a lid (120) of the water tank (114).

11. Vaporiser device according to any of the preceding claims, **characterized in that** the water tank is closed towards the top by a lid with a highest point having the vapor outlet thereon, preferably only having the vapor outlet thereon as a unique opening of the water tank to the outside.

12. Vaporiser device according to any of the claims 8 to 10, **characterized in that** the water tank (114) is closed towards the top and reaches downward into an inner section above the interior area (126) and/or extends downwards with the guiding surfaces (123) of the vapor guidance, while it extends at a higher level in an outer section above the exterior area (116), wherein the vapor outlet (121) goes off from this higher extending outer section, wherein preferably the water tank (114) is closed towards the top having only the vapor outlet (121) thereon as a unique opening of the water tank to the outside.

13. Vaporiser device according to any of the preceding claims, **characterized in that** a water inlet (119) leads into the interior area (126), in particular exclusively or at first into the interior area, preferably from below.

14. Vaporiser device according to any of the preceding claims, **characterized in that** the water tank (114) in addition to water inlet (119) and vapor outlet (121) has at most one further interface as an inlet or as an outlet, wherein preferably the water tank (114) is closed with the exception of water inlet (119) and vapor outlet (121).

15. Vaporiser device according to any of the preceding claims, **characterized in that** the inner partitioning wall (125) is lower than the outer wall (115) of the water tank (114) and/or is higher than a heating device (117) disposed on the outer wall (115), wherein preferably the inner partitioning wall (125) protrudes beyond the provided or defined water level of water (113) in the water tank (114).

## Revendications

1. Dispositif d'évaporation (111) pour de l'eau (113),
- le dispositif d'évaporation (111) présentant un réservoir d'eau (114) avec une paroi extérieure (115),
- un dispositif de chauffage (117) étant prévu au niveau de la paroi extérieure,
- une paroi de séparation intérieure (125) étant prévue dans le réservoir d'eau (114), laquelle s'étend à distance de la paroi extérieure (115) et définit une zone intérieure (126) dans le réservoir d'eau,
- une zone extérieure (116) étant formée entre la paroi de séparation intérieure (125) et la paroi extérieure (115),
- le réservoir d'eau (114) présentant une alimentation en eau (119) et une sortie de vapeur (121),
- le réservoir d'eau (114) présentant au moins un canal de passage (127) pour un écoulement d'eau entre la zone intérieure (126) et la zone extérieure (116),
- le canal de passage (127) étant prévu au niveau de la paroi de séparation intérieure (125) et à travers la paroi de séparation intérieure sous forme d'au moins une ouverture de passage pour l'eau (113) en bas au niveau de la paroi de séparation intérieure ou dans une zone inférieure de la paroi de séparation intérieure,
**caractérisé en ce que**
- la paroi de séparation intérieure (125) s'étend essentiellement en ligne droite dans la direction horizontale et est réalisée sous forme tubulaire à la manière d'un tube couché,
- l'au moins un canal de passage (127) est prévu dans la zone inférieure de la paroi de séparation intérieure (125).

2. Dispositif d'évaporation selon la revendication 1, **caractérisé en ce que** le canal de passage (127) est prévu au niveau d'un point le plus bas de la paroi de séparation intérieure (125) ou dans une zone la plus basse de la paroi de séparation intérieure.

3. Dispositif d'évaporation selon la revendication 1 ou 2, **caractérisé en ce que** la paroi de séparation intérieure s'étend essentiellement en ligne droite dans la direction verticale, celle-ci étant réalisée de manière fermée sur son pourtour et à la manière d'une bague.

4. Dispositif d'évaporation selon l'une quelconque des revendications précédentes, **caractérisé en ce que** la paroi de séparation intérieure (125) présente vers le haut une ouverture.

5. Dispositif d'évaporation selon l'une quelconque des revendications précédentes, **caractérisé en ce que** l'au moins un canal de passage (127) est réalisé sous forme de fente allongée ou sous forme d'ouverture allongée, de préférence au niveau du point le plus bas de la paroi de séparation intérieure (125).

6. Dispositif d'évaporation selon l'une quelconque des revendications précédentes, **caractérisé en ce que** la paroi de séparation intérieure (125) est ouverte vers le haut dans la direction verticale, la paroi de séparation intérieure (125), de préférence dans le cas d'un dispositif d'évaporation (111) selon l'une quelconque des revendications 1 à 3, ne recouvrant pas ou ne fermant pas la région intérieure (126).

7. Dispositif d'évaporation selon l'une quelconque des revendications précédentes, **caractérisé en ce que** la paroi extérieure (115) et la paroi de séparation intérieure (125) sont réalisées avec un pourtour fermé et/ou sous forme circulaire, en particulier sont réalisées avec une section transversale de même type, de préférence ronde circulaire.

8. Dispositif d'évaporation selon l'une quelconque des revendications précédentes, **caractérisé en ce qu'**un guidage de la vapeur vers la sortie de vapeur (121) est prévu, le guidage de vapeur recouvrant au moins en partie la zone intérieure (126), le guidage de vapeur présentant de préférence des surfaces de guidage (123) d'allure oblique avec un biseau qui est tourné vers le bas dans la zone intérieure (126), les surfaces de guidage étant notamment réalisées avec un pourtour fermé et/ou à symétrie de révolution.

9. Dispositif d'évaporation selon la revendication 8, **caractérisé en ce que** la sortie de vapeur (121) est située au-dessus de la zone intérieure (126), en particulier exactement au-dessus de la zone intérieure (126) dans la direction verticale.

10. Dispositif d'évaporation selon la revendication 8 ou 9, **caractérisé en ce que** les surfaces de guidage (123) sont disposées et/ou fixées au niveau d'un couvercle (120) du réservoir d'eau (114).

11. Dispositif d'évaporation selon l'une quelconque des revendications précédentes, **caractérisé en ce que** le réservoir d'eau est fermé vers le haut au moyen d'un couvercle dont le point le plus haut présente la sortie de vapeur, de préférence seulement avec sur celui-ci la sortie de vapeur en tant que seule ouverture vers l'extérieur du réservoir d'eau.

12. Dispositif d'évaporation selon l'une quelconque des revendications 8 à 10, **caractérisé en ce que** le réservoir d'eau (114) est fermé vers le haut et, dans une portion intérieure, s'étend vers le bas au-dessus de la zone intérieure (126) et/ou s'étend vers le bas avec les surfaces de guidage (123) du guidage de la vapeur tandis qu'il s'étend plus haut dans une portion extérieure au-dessus de la zone extérieure (116), la sortie de vapeur (121) partant de cette portion extérieure s'étendant plus haut, de préférence le réservoir d'eau (114) étant fermé vers le haut seulement avec la sortie de vapeur (121) sur celui-ci en tant que seule ouverture vers l'extérieur du réservoir d'eau.

13. Dispositif d'évaporation selon l'une quelconque des revendications précédentes, **caractérisé en ce qu'**une entrée d'eau (119) conduit dans la zone intérieure (126), en particulier exclusivement, ou d'abord dans la zone intérieure, de préférence par le dessous.

14. Dispositif d'évaporation selon l'une quelconque des revendications précédentes, **caractérisé en ce que** le réservoir d'eau (114) présente en plus de l'alimentation en eau (119) et de la sortie de vapeur (121), au maximum une interface supplémentaire en tant qu'entrée ou sortie, de préférence le réservoir d'eau (114) étant fermé à l'exception de l'alimentation en eau (119) et de la sortie de vapeur (121).

15. Dispositif d'évaporation selon l'une quelconque des revendications précédentes, **caractérisé en ce que** la paroi de séparation intérieure (125) est plus basse que la paroi extérieure (115) du réservoir d'eau (114) et/ou est plus haute qu'un dispositif de chauffage (117) disposé au niveau de la paroi extérieure (115), de préférence la paroi de séparation intérieure (125) dépassant au-dessus du niveau prévu ou défini de l'eau (113) dans le réservoir d'eau (114).
